# EUROPEAN PATENT APPLICATION

(11) **EP 4 398 623 A1**
(43) Date of publication of application: **10.07.2024**
(21) Application number: 21955547.1
(22) Date of filing: 03.09.2021
(51) Int. Cl.: H04W 24/02

(54) **SENSING SIGNAL NEGOTIATION METHOD AND APPARATUS, AND USER EQUIPMENT, BASE STATION, CORE NETWORK ENTITY AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Hughes, Andrea Michelle
(86) International application number: PCT/CN2021/116561
(87) International publication number: WO 2023/029014

(57) **Abstract**

The present disclosure belongs to the technical field of communications. Provided are a sensing signal negotiation method and apparatus, and a user equipment, a base station, a core network entity and a storage medium. The method comprises: a negotiation information receiving end being able to receive negotiation information, which is sent by a negotiation information sending end, and the negotiation information receiving end then determining sensing signal configuration information on the basis of the negotiation information, and sending the sensing signal configuration information to a sensing signal sending end and/or sensing signal receiving end, such that the sensing signal sending end and the sensing signal receiving end perform transmission of receiving and sending of a sensing signal on the basis of the sensing signal configuration information. Therefore, by means of the embodiments of the present disclosure, determined sensing signal configuration information can fit the requirement of a sensing signal sending end and a sensing signal receiving end for a sensing signal and is adapted to an application scenario of the sensing signal, thereby ensuring a subsequent sensing effect.

## Description

### TECHNICAL FIELD

The present disclosure relates to the field of communication technology, and in particular, to methods and apparatuses for negotiation of sensing signals, a user equipment, a base station, a core network entity and a storage medium.

### BACKGROUND

As a new technology, wireless sensing technology is usually used to realize motion detection, gesture recognition, biometric measurement, among others. Wireless sensing technology mainly includes that: a sensing signal sender sends a sensing signal to a sensing signal receiver, during a transmission process, the sensing signal may be blocked by a reflector to result in various transmission effects such as reflection, diffraction, transmission, phase changes, Doppler shifts, and changes of signal strength, and based on this, the sensing signal receiver can obtain information on the reflector by sensing the received sensing signal, thus realizing motion detection, gesture recognition, biometric measurement, among others.

Different types or configurations of sensing signals may have different sensing performance (for example, for sensing distance information, the measurement accuracy corresponding to a first sensing signal is 1 mm, while the measurement accuracy corresponding to a second sensing signal is 1 cm), so when the sensing signal sender sends different types of sensing signals, the sensing effect of the sensing signal receiver will be directly affected. Based on this, how to send a specific type or configuration of sensing signals for specific needs is an urgent problem to be solved.

### SUMMARY

The present disclosure provides methods and apparatuses for negotiation of sensing signals, a user equipment, a base station, a core network entity and a storage medium, so that the sensing performance of the sensing signal matches the sensing requirement.

The method for negotiation of sensing signals provided by the embodiment of one aspect of the disclosure is applied to a negotiation information receiver, including:
obtaining negotiation information sent by a negotiation information sender, wherein the negotiation information comprises at least one of: a sensing request message, a sensing method supported by a sensing signal receiver, a transceiving mode of the sensing signal between a sensing signal sender and the sensing signal receiver, information of the sensing signal sender, information of the sensing signal receiver, type information of the sensing signal, resource configuration information of the sensing signal, and service information corresponding to the sensing signal.

The method for negotiation of sensing signals provided by the embodiment of another aspect of the disclosure is applied to a negotiation information sender, including:
sending negotiation information to a negotiation information receiver, wherein the negotiation information comprises at least one of: a sensing request message, a sensing method supported by a sensing signal receiver, a transceiving mode of the sensing signal between a sensing signal sender and the sensing signal receiver, information of the sensing signal sender, information of the sensing signal receiver, type information of the sensing signal, resource configuration information of the sensing signal, and service information corresponding to the sensing signal.

The method for negotiation of sensing signals provided by the embodiment of another aspect of the disclosure is applied to a sensing signal sender, including:
receiving sensing signal configuration information sent by a negotiation information receiver; and
sending a sensing signal to a sensing signal receiver based on the sensing signal configuration information.

The method for negotiation of sensing signals provided by the embodiment of another aspect of the disclosure is applied to a sensing signal receiver, including:
receiving sensing signal configuration information sent by a negotiation information receiver; and
receiving a sensing signal sent by a sensing signal sender based on the sensing signal configuration information.

The apparatus for negotiation of sensing signals provided by the embodiment of another aspect of the disclosure includes:
a obtaining module, configured for obtaining negotiation information sent by a negotiation information sender, wherein the negotiation information comprises at least one of: a sensing request message, a sensing method supported by a sensing signal receiver, a transceiving mode of the sensing signal between a sensing signal sender and a sensing signal receiver, information of the sensing signal sender, information of the sensing signal receiver, type information of the sensing signal, resource configuration information of the sensing signal, and service information corresponding to the sensing signal.

The apparatus for negotiation of sensing signals provided by the embodiment of another aspect of the disclosure includes:
a sending module, configured for sending negotiation information to a negotiation information receiver, wherein the negotiation information comprises at least one of: a sensing request message, a sensing method supported by a sensing signal receiver, a transceiving mode of the sensing signal between a sensing signal sender and a sensing signal receiver, information of the sensing signal sender, information of the sensing signal receiver, type information of the sensing signal, resource configuration information of the sensing signal, and service information corresponding to the sensing signal.

The apparatus for negotiation of sensing signals provided by the embodiment of another aspect of the disclosure includes:
a receiving module, configured for receiving sensing signal configuration information sent by a negotiation information receiver;
a sending module, further configured for sending a sensing signal to a sensing signal receiver based on the sensing signal configuration information.

The apparatus for negotiation of sensing signals provided by the embodiment of another aspect of the disclosure includes:
a receiving module, configured for receiving sensing signal configuration information sent by a negotiation information receiver,
wherein the receiving module is further configured for receiving a sensing signal sent by a sensing signal sender based on the sensing signal configuration information.

A user equipment provided by the embodiment of another aspect of the present disclosure includes: a transceiver; a memory; a processor connected to the transceiver and the memory respectively, configured for controlling wireless signal transceiving of the transceiver by executing computer-executable instructions on the memory, and implementing the method presented in the embodiment of the aspect above.

A base station provided by the embodiment of another aspect of the present disclosure includes: a transceiver; a memory; a processor connected to the transceiver and the memory respectively, configured for controlling wireless signal transceiving of the transceiver by executing computer-executable instructions on the memory, and implementing the method presented in the embodiment of the aspect above.

A core network entity provided by the embodiment of another aspect of the present disclosure includes: a transceiver; a memory; a processor connected to the transceiver and the memory respectively, configured for controlling wireless signal transceiving of the transceiver by executing computer-executable instructions on the memory, and implementing the method presented in the embodiment of the aspect above.

A computer readable storage medium storing machine executable instructions, where the machine executable instructions are executed by a processor to implement the method described above.

In summary, in the methods and apparatuses for negotiation of sensing signals, a user equipment, a base station, a core network entity and a storage medium provided by the embodiment of the present disclosure, the negotiation information receiver can receive the negotiation information sent by the negotiation information sender; and then the negotiation information receiver determines the sensing signal configuration information based on the negotiation information and sends the sensing signal configuration information to the sensing signal sender and/or the sensing signal receiver, so that the sensing signal sender and the sensing signal receiver can transmit the sensing signal based on the sensing signal configuration information. Therefore, in the embodiment of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

Additional aspects and advantages of the present disclosure will be set forth in part in the following description, some of which will become apparent from the following description or will be understood through the practice of the present disclosure.

### BRIEF DESCRIPTION OF DRAWINGS

The above and/or additional aspects and advantages of the present disclosure will become apparent and readily understood from the following description of embodiments taken in combination with the accompanying drawings, in which:
FIG. 1 is a schematic flowchart of a method for negotiation of sensing signals provided by an embodiment of the present disclosure.
FIG. 2 is a schematic flowchart of a method for negotiation of sensing signals provided by another embodiment of the present disclosure.
FIG. 3 is a schematic flowchart of a method for negotiation of sensing signals provided by another embodiment of the present disclosure.
FIG. 4 is a schematic flowchart of a method for negotiation of sensing signals provided by another embodiment of the present disclosure.
FIG. 5 is a schematic flowchart of a method for negotiation of sensing signals provided by another embodiment of the present disclosure.
FIG. 6 is a schematic flowchart of a method for negotiation of sensing signals provided by another embodiment of the present disclosure.
FIG. 7 is a schematic flowchart of a method for negotiation of sensing signals provided by another embodiment of the present disclosure.
FIG. 8 is a schematic structural diagram of an apparatus for negotiation of sensing signals provided by an embodiment of the present disclosure.
FIG. 9 is a schematic structural diagram of an apparatus for negotiation of sensing signals provided by another embodiment of the present disclosure.
FIG. 10 is a schematic structural diagram of an apparatus for negotiation of sensing signals provided by another embodiment of the present disclosure.
FIG. 11 is a schematic structural diagram of an apparatus for negotiation of sensing signals provided by another embodiment of the present disclosure.
FIG. 12 is a block diagram of a user equipment provided by an embodiment of the present disclosure.
FIG. 13 is a block diagram of a base station provided by an embodiment of the present disclosure.

### DETAILED DESCRIPTION

Examples will be described in detail herein with the examples thereof expressed in the drawings. When the following descriptions involve the drawings, like numerals in different drawings represent like or similar elements unless stated otherwise. The embodiments described in the following examples do not represent all embodiments consistent with the embodiments of the present disclosure. Instead, they are merely examples of device and methods consistent with certain aspects of the embodiments of the disclosure, as detailed in the appended claims.

The term used in the embodiments of the present disclosure is for the purpose of describing particular examples only and is not intended to limit the present disclosure. As used in the embodiments of the present disclosure and the appended claims, the singular forms "a" and "the" are intended to include the plural forms as well, unless the context clearly indicates otherwise. It should also be understood that the term "and/or" as used herein refers to and includes any and all possible combinations of one or more of the associated listed items.

It shall be understood that, although the terms "first," "second," "third," and the like may be used in the embodiments of the present disclosure to describe various information, the information should not be limited by these terms. These terms are only used to distinguish one category of information from another. For example, without departing from the scope of the embodiments of the present disclosure, first information may be referred as second information; and similarly, second information may also be referred as first information. As used herein, the term "if' and "in a case that" may be interpreted as "when" or "upon" or "in response to determining" depending on the context.

Embodiments of the present disclosure are described in detail below, with examples of which shown in the drawings where identical or similar reference numerals throughout the description represent identical or similar elements. The embodiments described below by reference to the accompanying drawings are examples and are intended to be used to explain the present disclosure and should not be construed as limiting the present disclosure.

In the methods for negotiation of sensing signals according to the embodiments of the present disclosure, a negotiation information receiver can receive negotiation information sent by a negotiation information sender; and then the negotiation information receiver determines sensing signal configuration information based on the negotiation information and sends the sensing signal configuration information to a sensing signal sender and/or a sensing signal receiver, so that the sensing signal sender and the sensing signal receiver can transceive the sensing signal based on the sensing signal configuration information. Therefore, in the embodiments of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

The methods and apparatuses for negotiation of sensing signals, a user equipment, a base station, a core network entity and a storage medium provided by the present disclosure will be described below in detail with reference to the accompanying drawings.

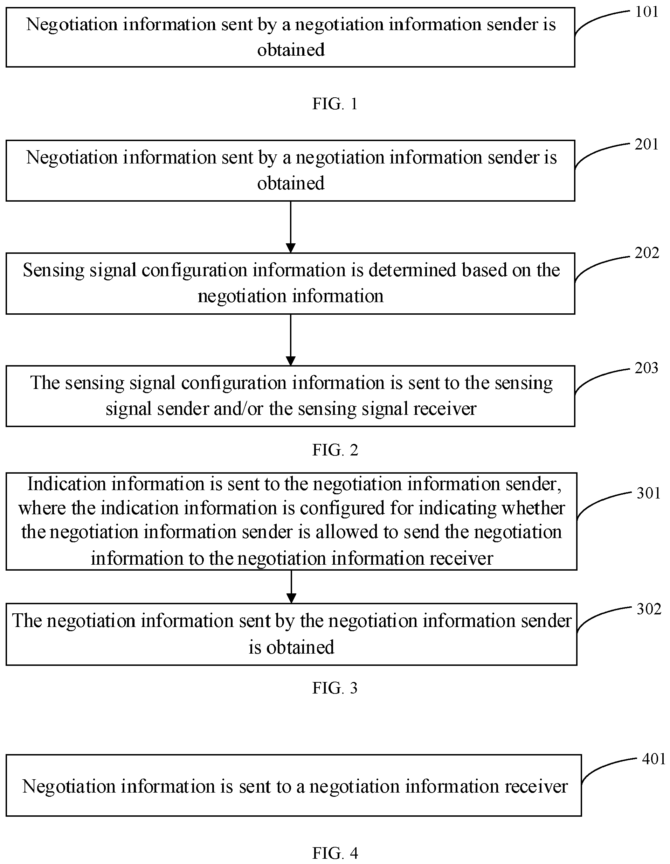

FIG. 1 is a schematic flowchart of a method for negotiation of sensing signals provided by an embodiment of the present disclosure, where the method is applied to a negotiation information receiver. As shown in FIG. 1, the method for negotiation of sensing signals may include the following steps.

In step 101, negotiation information sent by a negotiation information sender is obtained.

It should be noted that in one embodiment of the present disclosure, the negotiation information receiver may include any one of:
a base station; or
a wireless access point.

In one embodiment of the present disclosure, the wireless access point may be an access point (AP) of WiFi.

And, in one embodiment of the present disclosure, the negotiation information sender may include any one of:
a base station;
a wireless access point;
a user equipment (UE); or
a core network entity.

It should be noted that the UE may be a device that provides connectivity of voice and/or data to a user. The UE may communicate with one or more core networks via a radio access network (RAN). And the UE may be an Internet of Things terminal, such as a sensor device, a mobile phone (or a cellular phone), and a computer with an Internet of Things terminal. For example, the UE may be a stationary, portable, pocket-sized, hand-held, computer-built or vehicle-mounted apparatus. For example, the UE may be a station (STA), a subscriber unit, a subscriber station, a mobile station, a mobile, a remote station, an access point, a remote terminal, an access terminal, a user terminal, or a user agent. In an example, the UE can also be a device such as an unmanned aerial vehicle. In an example, the UE can also be a vehicle-mounted device, for example, an on-vehicle computer with a wireless communication function, or a wireless terminal externally connected with an on-vehicle computer. In an example, the UE can also be a roadside device, for example, a street lamp with a wireless communication function, a signal lamp or other roadside devices.

Further, in one embodiment of the present disclosure, the core network entity may include any of: an access and mobility management function (AMF);
a user plane function (UPF);
a mobility management entity (MME); or
a service gateway.

In one embodiment of the present disclosure, the negotiation information may include at least one of: a sensing request message, a sensing method supported by a sensing signal receiver, a transceiving mode of the sensing signal between the sensing signal sender and the sensing signal receiver, information of the sensing signal sender, information of the sensing signal receiver, type information of the sensing signal, resource configuration information of the sensing signal, and service information corresponding to the sensing signal.

Specifically, in one embodiment of the present disclosure, the sensing request message is specifically used to request a wireless sensing process. And, in one embodiment of the present disclosure, the sensing request message may be sent by a sensing signal sender or a sensing signal receiver or a core network entity (e.g., a core network entity serving the sensing signal sender and/or the sensing signal receiver) to the negotiation information sender.

Further, in one embodiment of the present disclosure, the sensing method supported by the sensing signal receiver may include at least one of:
a time of flight (TOF) sensing method; or
a phase and amplitude change (PAC) sensing method.

In one embodiment of the present disclosure, the TOF sensing method may be that the sensing signal receiver senses according to a transmission time and/or transmission angle and/or arrival angle of the sensing signal. As an example, in one embodiment of the present disclosure, the TOF sensing method may be: the sensing signal receiver obtains coordinates and/or velocity information of a reflector during a flight process of the sensing signal according to flight characteristics of the sensing signal.

In one embodiment of the present disclosure, the PAC sensing method may be sensing based on historical change information of a phase and/or amplitude of a reflected signal. As an example, in one embodiment of the present disclosure, the PAC sensing method may be: the sensing signal receiver matches the characteristics for the phase and/or amplitude changes of the sensing signal to a specific behavior pattern corresponding to the reflector according to the change characteristics.

In one embodiment of the present disclosure, the transceiving mode of the sensing signal may include at least one of:
the sensing signal sender being a base station, the sensing signal receiver being a base station, and the sensing signal sender and the sensing signal receiver being different base stations;
the sensing signal sender being a base station, the sensing signal receiver being a base station, and the sensing signal sender and the sensing signal receiver being the same base station;
the sensing signal sender being a wireless access point, the sensing signal receiver being a wireless access point, and the sensing signal sender and the sensing signal receiver being different wireless access points;
the sensing signal sender being a wireless access point, the sensing signal receiver being a wireless access point, and the sensing signal sender and the sensing signal receiver being the same wireless access point;
the sensing signal sender being a UE, the sensing signal receiver being a UE, and the sensing signal sender and the sensing signal receiver being different UEs;
the sensing signal sender being a UE, the sensing signal receiver being a UE, and the sensing signal sender and the sensing signal receiver being the same UE;
the sensing signal sender being a base station, and the sensing signal receiver being a UE;
the sensing signal sender being a UE, and the sensing signal receiver being a base station;
the sensing signal sender being a wireless access point, and the sensing signal receiver being a UE; or
the sensing signal sender being a UE, and the sensing signal receiver being a wireless access point.

In one embodiment of the present disclosure, the information of the sensing signal sender may include at least one of:
a type of the sensing signal sender; or
an identity of the sensing signal sender.

Specifically, in one embodiment of the present disclosure, the type of the sensing signal sender may include any one of:
a base station;
a wireless access point; or
a UE.

And, in one embodiment of the present disclosure, the identity of the sensing signal sender may include at least one of:
when the type of the sensing signal sender is a base station, the identity of the base station;
when the type of the sensing signal sender is a wireless access point, the identity of the wireless access point;
when the type of the sensing signal sender is a UE, the identity of the UE; or
a cell identity corresponding to the sensing signal sender.

In one embodiment of the present disclosure, the cell identity corresponding to the sensing signal sender may include at least one of:
a frequency identity corresponding to the sensing signal sender (for example, an absolute radio frequency channel number (ARFCN));
a physical cell identity corresponding to the sensing signal sender; or
a global cell identity corresponding to the sensing signal sender.

In one embodiment of the present disclosure, the information of the sensing signal receiver may include at least one of:
a type of the sensing signal receiver; or
an identity of the sensing signal receiver.

Specifically, in one embodiment of the present disclosure, the type of the sensing signal receiver may include any one of:
a base station;
a wireless access point; or
a UE.

And, in one embodiment of the present disclosure, the identity of the sensing signal receiver may include at least one of:
when the sensing signal receiver is a base station, an identity of the base station;
when the sensing signal receiver is a wireless access point, an identity of the wireless access point;
when the sensing signal receiver is a UE, an identity of the UE; or
a cell identity corresponding to the sensing signal receiver.

Further, in one embodiment of the present disclosure, the cell identity corresponding to the sensing signal receiver may include at least one of:
a frequency identity corresponding to the sensing signal receiver (for example, an ARFCN);
a physical cell identity corresponding to the sensing signal receiver; or
a global cell identity corresponding to the sensing signal receiver.

In one embodiment of the present disclosure, the type information of the sensing signal may include at least one of:
a waveform of the sensing signal; or
a signal type of the sensing signal.

Specifically, in one embodiment of the present disclosure, the waveform of the sensing signal may include at least one of: an orthogonal frequency division multiplexing (OFDM) symbol waveform;
a pulse waveform; or
a frequency modulated continuous wave (FMCW).

And, in one embodiment of the present disclosure, the signal type of the sensing signal may include at least one of: a synchronization signal block (SSB);
a channel state information-reference signal (CSI-RS);
a sounding reference signal (SRS); or
a physical random access channel (PRACH).

In one embodiment of the present disclosure, the resource configuration information of the sensing signal may include at least one of:
time-domain resource configuration corresponding to the sensing signal;
frequency-domain resource configuration corresponding to the sensing signal;
coding resource configuration corresponding to the sensing signal; or
space resource configuration corresponding to the sensing signal.

In one embodiment of the present disclosure, the time-domain resource configuration corresponding to the sensing signal may include at least one of:
a starting resource position of the time-domain resource corresponding to the sensing signal;
a resource allocation period of the time-domain resource corresponding to the sensing signal; or
an available resource position in each resource allocation period of the time-domain resource corresponding to the sensing signal.

Specifically, in one embodiment of the present disclosure, the starting resource position of the time-domain resource corresponding to the sensing signal may be specifically a time position where a system frame number (SFN) = 1, or a subframe number=1, or a slot number=1, or a OFDM symbol number=1.

And, in one embodiment of the present disclosure, the resource allocation period of the time-domain resource corresponding to the sensing signal can be 10ms.

Further, in one embodiment of the present disclosure, when the resource allocation period of the time domain resource is 10ms, the available resource position in each resource allocation period of the time-domain resource corresponding to the sensing signal may be in the resource of 5 consecutive slots starting from the starting resource position in each 10ms period. And, in one embodiment of the present disclosure, the available resource position in each resource allocation period of the time-domain resource corresponding to the sensing signal may be indicated by bitmap. As an example, in one embodiment of the present disclosure, when the available resource position in each resource allocation period is in the resource of 5 consecutive slots starting from the starting resource position in each 10ms period, the resource of the 5 consecutive slots starting from the starting resource position can be indicated by bitmap. Each bit position represents 1 slot position (e.g. the first bit represents slot-1).

And, in one embodiment of the present disclosure, the frequency-domain resource configuration corresponding to the sensing signal may include at least one of:
frequency point information (for example, an ARFCN) corresponding to the sensing signal;
bandwidth part (BWP) information corresponding to the sensing signal;
physical resource block (PRB) information corresponding to the sensing signal; or
bandwidth information (for example, 20MHz) corresponding to the sensing signal;

In one embodiment of the present disclosure, the PRB information corresponding to the sensing signal may include at least one of:
a starting PRB identity corresponding to the sensing signal;
an ending PRB identity corresponding to the sensing signal; or
a number of PRBs corresponding to the sensing signal.

Further, in one embodiment of the present disclosure, the coding resource configuration corresponding to the sensing signal is specifically a coding mode corresponding to the sensing signal. Further, in one embodiment of the present disclosure, the coding resource configuration corresponding to the sensing signal can be a coding identity which corresponds to a coding mode. As an example, in one embodiment of the present disclosure, the coding resource configuration corresponding to the sensing signal can be a cyclic shift identity of a demodulation reference signal (DMRS), and the sensing signal may be coded by a coding mode corresponding to the cyclic shift identity of the DMRS. In another embodiment of the present disclosure, the coding resource configuration corresponding to the sensing signal can be a preamble identity of a PRACH, and the sensing signal may be coded by a coding mode corresponding to the preamble identity of the PRACH.

Further, in one embodiment of the present disclosure, the space resource configuration corresponding to the sensing signal may include at least one of:
a space resource identity corresponding to the sensing signal; or
a corresponding relationship between the space resource identity and a signal type of the sensing signal.

Specifically, in one embodiment of the present disclosure, the space resource identity corresponding to the sensing signal may include at least one of:
a transmission configuration indicator (TCI) identity corresponding to the sensing signal;
an SSB identity corresponding to the sensing signal;
a CSI-RS identity corresponding to the sensing signal; or
an SRS identity corresponding to the sensing signal.

And, in one embodiment of the present disclosure, the corresponding relationship between the space resource identity and the signal type of the sensing signal can be used to determine the signal type of the corresponding sensing signal based on the space resource identity after determining the space resource identity.

Specifically, in one embodiment of the present disclosure, when the determined space resource identity is a space resource identity having a quasi-colocation (QCL) relationship with an SRS sensing signal, the signal type of the sensing signal corresponding to the space resource identity may be an SRS signal.

And, in another embodiment of the present disclosure, the corresponding relationship between the space resource identity and the signal type of the sensing signal can be that an SSB identity corresponds to a PRACH sensing signal, or that a CSI-RS identity corresponds to a PRACH sensing signal.

In one embodiment of the present disclosure, the service information corresponding to the sensing signal may include at least one of:
information of a sensed target;
service identity information of a service corresponding to the sensing signal;
bearer information corresponding to the sensing signal, the bearer information being bearer information corresponding to a service corresponding to the sensing signal;
service type information of a service corresponding to the sensing signal; or
a sensing requirement of a service corresponding to the sensing signal.

Specifically, in one embodiment of the present disclosure, the information of the sensed target may include at least one of:
an area position of the sensed target;
a type of the sensed target (e.g., building, human body, human face, car); or
an identity of the sensed target.

Specifically, in one embodiment of the present disclosure, the area position information of the sensed target may be a specific range. As an example, in one embodiment of the present disclosure, the area position information of the sensed target may be a horizontal abscissa range [x1, x2], a horizontal ordinate range [y1, y2], and a vertical coordinate range [z1, y1] with the sensing signal receiver as the origin.

In another embodiment of the present disclosure, the area position information of the sensed target may be a distance range [d1, d2] of the sensed target relative to the sensing signal receiver, and the direction angle information of the sensed target relative to the sensing signal receiver.

In another embodiment of the present disclosure, the area position information of the sensed target may be a sensed area determined based on a longitude range, and/or a latitude range, and/or an altitude range.

And, in one embodiment of the present disclosure, the bearer information corresponding to the sensing signal may include at least one of:
a session identity (e.g., PDU session ID) corresponding to the sensing signal;
a service flow identity (e.g., QoS flow ID) corresponding to the sensing signal; or
a radio bearer identity (e.g., data radio bearer (DRB) ID) corresponding to the sensing signal; or
a logical channel identity corresponding to the sensing signal.

Further, in one embodiment of the present disclosure, the service type information of the service corresponding to the sensing signal may include at least one of:
weather forecast sensing (e.g., a rainy day, a snowy day);
traffic congestion sensing (e.g., accidents);
pulse sensing;
3 Dimensions (3D) imaging sensing; or
augmented reality (AR) game sensing.

Further, in one embodiment of the present disclosure, the sensing requirement of the service corresponding to the sensing signal may include at least one of:
sensing a distance between the sensing signal receiver and the sensed target (e.g., 100m);
sensing accuracy of the distance (e.g., the accuracy is +/-5cm);
sensing a range of an angle between the sensing signal receiver and the sensed target (e.g., a horizontal angle range of 0 degrees to 60 degrees, and/or a vertical angle range of 0 degrees to 40 degrees);
sensing accuracy of the angle (e.g., the minimum angle that can distinguish reflectors is 1 degree);
sensing a maximum speed of the sensed target (e.g., the maximum value is 100Km/h); or
sensing accuracy of the speed (e.g., the accuracy is +/-5m/h);

In addition, it should be noted that in one embodiment of the present disclosure, the negotiation information is specifically determined by the negotiation information sender. And, in one embodiment of the present disclosure, the negotiation information sender may be a device having a relation with the sensing signal sender and/or the sensing signal receiver, thereby ensuring that the negotiation information determined by the negotiation information sender is information suitable for the requirements of the sensing signal sender and the sensing signal receiver for the sensing signal as well as the application scene of the sensing signal. Further, it is ensured that the subsequent sensing signal configuration information determined based on the negotiation information can be suitable for the requirements of the sensing signal sender and the sensing signal receiver for the sensing signal as well as the application scene of the sensing signal, thus ensuring the subsequent sensing effects.

And, in one embodiment of the present disclosure, the relation between the negotiation information sender and the sensing signal sender and/or the sensing signal receiver may be that the negotiation information sender and the sensing signal sender and/or the sensing signal receiver are the same device. In another embodiment of the present disclosure, the relation between the negotiation information sender and the sensing signal sender and/or the sensing signal receiver may be that when the negotiation information sender is not the same device as the sensing signal sender and the sensing signal receiver, the negotiation information sender may be a device serving the sensing signal sender and/or the sensing signal receiver.

In summary, in the methods for negotiation of sensing signals provided by the embodiment of the present disclosure, the negotiation information receiver can receive the negotiation information sent by the negotiation information sender; and then the negotiation information receiver determines the sensing signal configuration information based on the negotiation information and sends the sensing signal configuration information to the sensing signal sender and/or the sensing signal receiver, so that the sensing signal sender and the sensing signal receiver can transceive the sensing signal based on the sensing signal configuration information. Therefore, in the embodiment of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

FIG. 2 is a schematic flowchart of a method for negotiation of sensing signals provided by another embodiment of the present disclosure, where the method is applied to a negotiation information receiver. As shown in FIG. 2, the method for negotiation of sensing signals may include the following steps.

In step 201, negotiation information sent by a negotiation information sender is obtained.

The detailed description of step 201 can refer to the related description in the above-mentioned embodiments and will not be repeated herein.

In step 202, sensing signal configuration information is determined based on the negotiation information.

In one embodiment of the present disclosure, the sensing signal configuration information may be part or all of the above negotiation information. In an example, in one embodiment of the present disclosure, the sensing signal configuration information may be at least one of type information of the sensing signal, resource configuration information of the sensing signal, and service information corresponding to the sensing signal as described above.

In step 203, the sensing signal configuration information is sent to the sensing signal sender and/or the sensing signal receiver.

It should be noted that in one embodiment of the present disclosure, the sensing signal sender, the sensing signal receiver, the negotiation information receiver and the negotiation information sender can be different devices respectively.

In another embodiment of the present disclosure, the sensing signal sender and the sensing signal receiver can be the same device which is different from the negotiation information receiver and the negotiation information sender respectively.

In another embodiment of the present disclosure, the sensing signal sender and negotiation information receiver can be the same device which is different from the sensing signal receiver and the negotiation information sender respectively.

In another embodiment of the present disclosure, the sensing signal sender and negotiation information sender can be the same device which is different from the sensing signal receiver and the negotiation information receiver respectively.

In another embodiment of the present disclosure, the sensing signal receiver and negotiation information receiver can be the same device which is different from the sensing signal sender and the negotiation information sender respectively.

In another embodiment of the present disclosure, the sensing signal receiver and negotiation information sender can be the same device which is different from the sensing signal sender and the negotiation information receiver respectively.

In another embodiment of the present disclosure, the negotiation information receiver and negotiation information sender can be the same device which is different from the sensing signal sender and the sensing signal receiver respectively.

In another embodiment of the present disclosure, the sensing signal sender, the sensing signal receiver and the negotiation information receiver can be the same device which is different from the negotiation information sender.

In another embodiment of the present disclosure, the sensing signal sender, the sensing signal receiver and the negotiation information sender can be the same device which is different from the negotiation information receiver.

In another embodiment of the present disclosure, the sensing signal sender, the negotiation information receiver and the negotiation information sender can be the same device which is different from the sensing signal receiver.

In another embodiment of the present disclosure, the sensing signal receiver, the negotiation information receiver and the negotiation information sender can be the same device which is different from the sensing signal sender.

In another embodiment of the present disclosure, the sensing signal receiver, the negotiation information receiver and the negotiation information sender can be the same device as the sensing signal sender.

And, in one embodiment of the present disclosure, when the sensing signal sender, the sensing signal receiver and the negotiation information receiver are different devices respectively, the above step 203 includes sending the sensing signal configuration information to the sensing signal sender and the sensing signal receiver respectively.

In one embodiment of the present disclosure, when the sensing signal sender and the negotiation information receiver are the same device which is different from the sensing signal receiver, the above step 203 includes sending the sensing signal configuration information only to the sensing signal receiver.

In one embodiment of the present disclosure, when the sensing signal receiver and the negotiation information receiver are the same device which is different from the sensing signal sender, the above step 203 includes sending the sensing signal configuration information only to the sensing signal sender.

In another embodiment of the present disclosure, when the sensing signal sender, the sensing signal receiver and the negotiation information receiver are the same device, the step of "sending the sensing signal configuration information" may not be performed.

In summary, in the methods for negotiation of sensing signals provided by the embodiment of the present disclosure, the negotiation information receiver can receive the negotiation information sent by the negotiation information sender; and then the negotiation information receiver determines the sensing signal configuration information based on the negotiation information and sends the sensing signal configuration information to the sensing signal sender and/or the sensing signal receiver, so that the sensing signal sender and the sensing signal receiver can transceive the sensing signal based on the sensing signal configuration information. Therefore, in the embodiment of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

FIG. 3 is a schematic flowchart of a method for negotiation of sensing signals provided by another embodiment of the present disclosure, where the method is applied to a negotiation information receiver. As shown in FIG. 3, the method for negotiation of sensing signals may include the following steps.

In step 301: indication information is sent to the negotiation information sender, where the indication information is configured for indicating whether the negotiation information sender is allowed to send the negotiation information to the negotiation information receiver.

In one embodiment of the present disclosure, when the indication information indicates that the negotiation information sender is allowed to send the negotiation information to the negotiation information receiver, step 302 is continued.

In step 302, the negotiation information sent by the negotiation information sender is obtained.

The detailed description of step 302 can refer to the related description in the above-mentioned embodiments and will not be repeated herein.

In summary, in the methods for negotiation of sensing signals provided by the embodiment of the present disclosure, the negotiation information receiver can receive the negotiation information sent by the negotiation information sender; and then the negotiation information receiver determines the sensing signal configuration information based on the negotiation information and sends the sensing signal configuration information to the sensing signal sender and/or the sensing signal receiver, so that the sensing signal sender and the sensing signal receiver can transceive the sensing signal based on the sensing signal configuration information. Therefore, in the embodiment of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

FIG. 4 is a schematic flowchart of a method for negotiation of sensing signals provided by another embodiment of the present disclosure, where the method is applied to a negotiation information sender. As shown in FIG. 4, the method for negotiation of sensing signals may include the following steps.

In step 401, negotiation information is sent to a negotiation information receiver.

In one embodiment of the present disclosure, the negotiation information may include at least one of: a sensing request message, a sensing method supported by a sensing signal receiver, a transceiving mode of the sensing signal between the sensing signal sender and the sensing signal receiver, information of the sensing signal sender, information of the sensing signal receiver, type information of the sensing signal, resource configuration information of the sensing signal, and service information corresponding to the sensing signal.

And, in one embodiment of the present disclosure, the negotiation information sender can determine the negotiation information from the sensing signal sender and/or the sensing signal receiver. In one embodiment of the present disclosure, the negotiation information sender may be a device having a relation with the sensing signal sender and/or the sensing signal receiver, thereby ensuring that the negotiation information determined by the negotiation information sender is information suitable for the requirements of the sensing signal sender and the sensing signal receiver for the sensing signal as well as the application scene of the sensing signal. Further, it is ensured that the subsequent sensing signal configuration information determined based on the negotiation information can be suitable for the requirements of the sensing signal sender and the sensing signal receiver for the sensing signal as well as the application scene of the sensing signal, thus ensuring the subsequent sensing effects.

Further, in one embodiment of the present disclosure, the relation between the negotiation information sender and the sensing signal sender and/or the sensing signal receiver may be that the negotiation information sender and the sensing signal sender and/or the sensing signal receiver are the same device. In another embodiment of the present disclosure, the relation between the negotiation information sender and the sensing signal sender and/or the sensing signal receiver may be that when the negotiation information sender is not the same device as the sensing signal sender and the sensing signal receiver, the negotiation information sender may be a device serving the sensing signal sender and/or the sensing signal receiver.

The detailed description of the negotiation information receiver, the negotiation information sender and the negotiation information can refer to the related description in the above-mentioned embodiments and will not be repeated herein.

In summary, in the methods for negotiation of sensing signals provided by the embodiment of the present disclosure, the negotiation information sender can send negotiation information to the negotiation information receiver. Therefore, in the embodiment of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

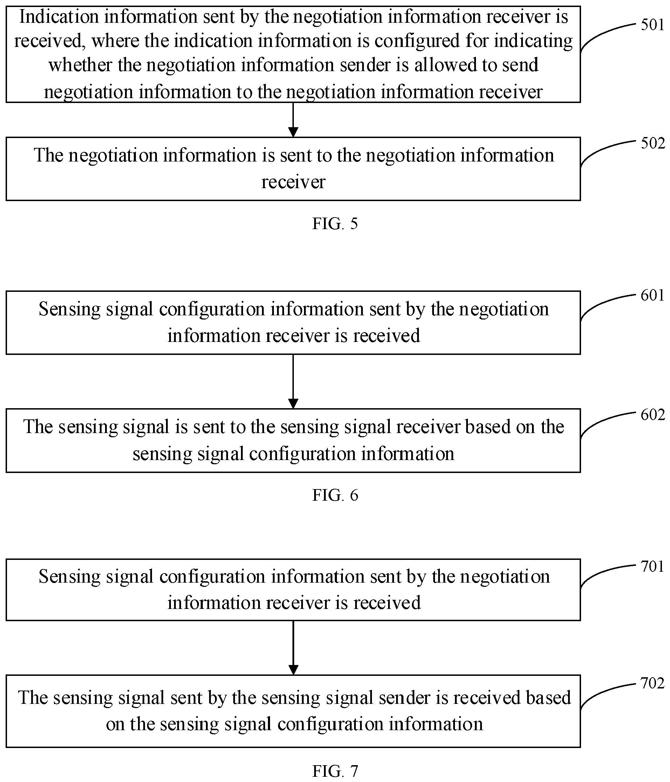

FIG. 5 is a schematic flowchart of a method for negotiation of sensing signals provided by another embodiment of the present disclosure, where the method is applied to a negotiation information sender. As shown in FIG. 5, the method for negotiation of sensing signals may include the following steps.

In step 501: indication information sent by the negotiation information receiver is received, where the indication information is configured for indicating whether the negotiation information sender is allowed to send negotiation information to the negotiation information receiver.

In one embodiment of the present disclosure, when the indication information indicates that the negotiation information sender is allowed to send the negotiation information to the negotiation information receiver, step 502 is continued.

In step 502, the negotiation information is sent to the negotiation information receiver.

The detailed description of step 502 can refer to the related description in the above-mentioned embodiments and will not be repeated herein.

In summary, in the methods for negotiation of sensing signals provided by the embodiment of the present disclosure, the negotiation information sender can send negotiation information to the negotiation information receiver. Therefore, in the embodiment of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

FIG. 6 is a schematic flowchart of a method for negotiation of sensing signals provided by another embodiment of the present disclosure, where the method is applied to a sensing signal sender. As shown in FIG. 6, the method for negotiation of sensing signals may include the following steps.

In step 601, sensing signal configuration information sent by the negotiation information receiver is received.

The detailed description of the negotiation information receiver, the negotiation information and the sensing signal configuration information can refer to the related description in the above-mentioned embodiments and will not be repeated herein.

In addition, in one embodiment of the present disclosure, the sensing signal sender and the negotiation information receiver can be the same device. In another embodiment of the present disclosure, the sensing signal sender and the negotiation information receiver can be different devices respectively.

Specifically, in one embodiment of the present disclosure, when the sensing signal sender and the negotiation information receiver are the same device, the step 601 includes directly determining the sensing signal configuration information for the sensing signal sender without receiving the sensing signal configuration information sent by the negotiation information receiver.

In step 602, the sensing signal is sent to the sensing signal receiver based on the sensing signal configuration information.

In summary, in the methods for negotiation of sensing signals provided by the embodiment of the present disclosure, the sensing signal sender can receive the sensing signal configuration information sent by the negotiation information receiver, and send the sensing signal to the sensing signal receiver based on the sensing signal configuration information. Therefore, in the embodiment of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

FIG. 7 is a schematic flowchart of a method for negotiation of sensing signals provided by another embodiment of the present disclosure, where the method is applied to a sensing signal receiver. As shown in FIG. 7, the method for negotiation of sensing signals may include the following steps.

In step 701, sensing signal configuration information sent by the negotiation information receiver is received.

In one embodiment of the present disclosure, the detailed description of the negotiation information receiver, the negotiation information and the sensing signal configuration information can refer to the related description in the above-mentioned embodiments and will not be repeated herein.

In addition, in one embodiment of the present disclosure, the sensing signal receiver and the negotiation information receiver can be the same device. In one embodiment of the present disclosure, the sensing signal receiver and the negotiation information receiver can be different devices respectively.

Specifically, in one embodiment of the present disclosure, when the sensing signal receiver and the negotiation information receiver are the same device, the step 701 includes directly determining the sensing signal configuration information without receiving the sensing signal configuration information sent by the negotiation information receiver.

In step 702, the sensing signal sent by the sensing signal sender is received based on the sensing signal configuration information.

In one embodiment of the present disclosure, when the sensing signal receiver receives the sensing signal sent by the sensing signal sender, the sensing signal can be sensed to determine relevant information of a reflector which blocks the sensing signal during a transmission process of the sensing signal, thus realizing motion detection, gesture recognition, biometric measurement, among others based on the relevant information of the reflector.

In one embodiment of the present disclosure, the relevant information of the reflector may include at least one of:
coordinate information of the reflector (e.g., coordinates of the reflector relative to the sensing signal receiver (e.g., distances, horizontal angles, vertical angles, etc.));
velocity information of the reflector (e.g., moving speed and direction of the reflector relative to the sensing signal receiver, etc.); or
behavior pattern information of the reflector (e.g., movement information such as running, walking, approaching, falling, swinging, etc.), or weather information (e.g. a rainy day, a snowy day, etc.), or traffic information (e.g. congestion, an accident, etc.).

In summary, in the methods for negotiation of sensing signals provided by the embodiment of the present disclosure, the sensing signal receiver can receive the sensing signal configuration information sent by the negotiation information receiver, and receive the sensing signal sent by the sensing signal receiver based on the sensing signal configuration information. Therefore, in the embodiment of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

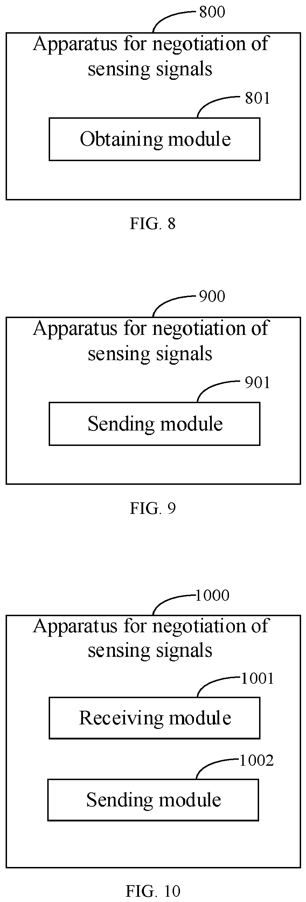

FIG. 8 is a schematic structural diagram of an apparatus for negotiation of sensing signals provided by an embodiment of the present disclosure. As shown in FIG. 8, the apparatus 800 may include:
a determining module 801, configured for a obtaining module and for obtaining negotiation information sent by a negotiation information sender; the negotiation information include at least one of: a sensing request message, a sensing method supported by a sensing signal receiver, a transceiving mode of the sensing signal between a sensing signal sender and a sensing signal receiver, information of the sensing signal sender, information of the sensing signal receiver, type information of the sensing signal, resource configuration information of the sensing signal, and service information corresponding to the sensing signal.

In summary, in the apparatuses for negotiation of sensing signals provided by the embodiment of the present disclosure, the negotiation information receiver can receive the negotiation information sent by the negotiation information sender; and then the negotiation information receiver determines the sensing signal configuration information based on the negotiation information and sends the sensing signal configuration information to the sensing signal sender and/or the sensing signal receiver, so that the sensing signal sender and the sensing signal receiver can transceive the sensing signal based on the sensing signal configuration information. Therefore, in the embodiment of the present disclosure, before configuring the sensing signal, negotiation information is first determined based on the sensing signal sender and/or the sensing signal receiver, and then the sensing signal configuration information of is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

In one embodiment of the present disclosure, the negotiation information receiver may include any one of:
a base station; or
a wireless access point.

Further, in another embodiment of the present disclosure, the negotiation information sender may include any one of:
a base station;
a wireless access point;
a user equipment (UE); or
a core network entity.

Further, in another embodiment of the present disclosure, the core network entity may include any one of:
an AMF;
a UPF;
an MME; or
a service gateway.

Further, in another embodiment of the present disclosure, the sensing method may include at least one of:
a TOF sensing method; or
a PAC sensing method.

Further, in another embodiment of the present disclosure, the transceiving mode of the sensing signal may include at least one of:
the sensing signal sender being a base station, the sensing signal receiver being a base station, and the sensing signal sender and the sensing signal receiver being different base stations;
the sensing signal sender being a base station, the sensing signal receiver being a base station, and the sensing signal sender and the sensing signal receiver being the same base station;
the sensing signal sender being a wireless access point, the sensing signal receiver being a wireless access point, and the sensing signal sender and the sensing signal receiver being different wireless access points;
the sensing signal sender being a wireless access point, the sensing signal receiver being a wireless access point, and the sensing signal sender and the sensing signal receiver being the same wireless access point;
the sensing signal sender being a UE, the sensing signal receiver being a UE, and the sensing signal sender and the sensing signal receiver being different UEs;
the sensing signal sender being a UE, the sensing signal receiver being a UE, and the sensing signal sender and the sensing signal receiver being the same UE;
the sensing signal sender being a base station, and the sensing signal receiver being a UE;
the sensing signal sender being a UE, and the sensing signal receiver being a base station;
the sensing signal sender being a wireless access point, and the sensing signal receiver being a UE;
the sensing signal sender being a UE, and the sensing signal receiver being a wireless access point.

Further, in another embodiment of the present disclosure, the type of the sensing signal sender may include any one of:
a base station;
a wireless access point; or
a UE.

Further, in another embodiment of the present disclosure, the identity of the sensing signal sender may include at least one of:
in response to the type of the sensing signal sender being a base station, an identity of the base station;
in response to the type of the sensing signal sender being a wireless access point, an identity of the wireless access point;
in response to the type of the sensing signal sender being a UE, an identity of the UE; or
a cell identity corresponding to the sensing signal sender.

Further, in another embodiment of the present disclosure, the cell identity corresponding to the sensing signal sender may include at least one of:
a frequency identity corresponding to the sensing signal sender;
a physical cell identity corresponding to the sensing signal sender; or
a global cell identity corresponding to the sensing signal sender.

Further, in another embodiment of the present disclosure, the information of the sensing signal receiver may include at least one of:
a type of the sensing signal receiver; or
an identity of the sensing signal receiver.

Further, in another embodiment of the present disclosure, the type of the sensing signal receiver may include any one of:
a base station;
a wireless access point; or
a UE.

Further, in another embodiment of the present disclosure, the identity of the sensing signal receiver may include at least one of:
in response to the sensing signal receiver being a base station, an identity of the base station;
in response to the sensing signal receiver being a wireless access point, an identity of the wireless access point;
in response to the sensing signal receiver being a UE, an identity of the UE; or
a cell identity corresponding to the sensing signal receiver.

Further, in another embodiment of the present disclosure, the cell identity corresponding to the sensing signal receiver may include at least one of:
a frequency identity corresponding to the sensing signal receiver;
a physical cell identity corresponding to the sensing signal receiver; or
a global cell identity corresponding to the sensing signal receiver.

Further, in another embodiment of the present disclosure, the type information of the sensing signal may include at least one of:
a waveform of the sensing signal; or
a signal type of the sensing signal.

Further, in another embodiment of the present disclosure, the waveform of the sensing signal may include at least one of:
an OFDM symbol waveform;
a pulse waveform; or
an FMCW.

Further, in another embodiment of the present disclosure, the signal type of the sensing signal may include at least one of:
an SSB;
a CSI-RS;
an SRS; or
a PRACH.

Further, in another embodiment of the present disclosure, the resource configuration information of the sensing signal may include at least one of:
time-domain resource configuration corresponding to the sensing signal;
frequency-domain resource configuration corresponding to the sensing signal;
coding resource configuration corresponding to the sensing signal; or
space resource configuration corresponding to the sensing signal.

Further, in another embodiment of the present disclosure, the time-domain resource configuration corresponding to the sensing signal may include at least one of:
a starting resource position of a time-domain resource configuration corresponding to the sensing signal;
a resource allocation period of the time-domain resource configuration corresponding to the sensing signal; or
an available resource position in each resource allocation period of the time-domain resource configuration corresponding to the sensing signal.

Further, in another embodiment of the present disclosure, the frequency-domain resource configuration corresponding to the sensing signal may include at least one of:
frequency point information corresponding to the sensing signal;
BWP information corresponding to the sensing signal;
PRB information corresponding to the sensing signal; or
bandwidth information corresponding to the sensing signal;

Further, in another embodiment of the present disclosure, the PRB information corresponding to the sensing signal may include at least one of:
a starting PRB identity corresponding to the sensing signal;
an ending PRB identity corresponding to the sensing signal; or
a number of PRBs corresponding to the sensing signal.

Further, in one embodiment of the present disclosure, the space resource configuration corresponding to the sensing signal may include at least one of:
a space resource identity corresponding to the sensing signal; or
a corresponding relationship between the space resource identity and a signal type of the sensing signal.

Further, in one embodiment of the present disclosure, the space resource identity corresponding to the sensing signal may include at least one of:
a transmission configuration indicator (TCI) identity corresponding to the sensing signal;
an SSB identity corresponding to the sensing signal;
a CSI-RS identity corresponding to the sensing signal; or
an SRS identity corresponding to the sensing signal.

Further, in another embodiment of the present disclosure, the service information corresponding to the sensing signal may include at least one of:
information of a sensed target;
service identity information of a service corresponding to the sensing signal;
bearer information corresponding to the sensing signal, the bearer information being bearer information corresponding to a service corresponding to the sensing signal;
service type information of a service corresponding to the sensing signal; or
a sensing requirement of a service corresponding to the sensing signal.

Further, in another embodiment of the present disclosure, the information of the sensed target may include at least one of:
an area position of the sensed target;
type of the sensed target; or
an identity of the sensed target.

Further, in another embodiment of the present disclosure, the bearer information corresponding to the sensing signal may include at least one of:
a session identity corresponding to the sensing signal;
a service flow identity corresponding to the sensing signal;
a radio bearer identity corresponding to the sensing signal; or
a logical channel identity corresponding to the sensing signal.

Further, in another embodiment of the present disclosure, the service type information of the service corresponding to the sensing signal may include at least one of:
weather forecast sensing;
traffic congestion sensing;
pulse sensing;
3 Dimensions (3D) imaging sensing; or
augmented reality (AR) game sensing.

Further, in another embodiment of the present disclosure, the sensing requirement of the service corresponding to the sensing signal may include at least one of:
sensing a distance between the sensing signal receiver and the sensed target;
sensing accuracy of the distance;
sensing a range of an angle between the sensing signal receiver and the sensed target;
sensing accuracy of the angle;
sensing a maximum speed of the sensed target; or
sensing accuracy of the speed.

Further, in another embodiment of the present disclosure, the sensing signal sender, the sensing signal receiver and the negotiation information receiver can be the different devices, respectively.

Further, in another embodiment of the present disclosure, the above apparatus is further configured for:
determining sensing signal configuration information based on the negotiation information; and
sending the sensing signal configuration information to the sensing signal sender and the sensing signal receiver, respectively.

Further, in another embodiment of the present disclosure, the sensing signal sender and the negotiation information receiver are the same device which is different from the sensing signal receiver.

Further, in another embodiment of the present disclosure, the above apparatus is further configured for:
determining sensing signal configuration information based on the negotiation information; and
sending the sensing signal configuration information to the sensing signal receiver.

Further, in another embodiment of the present disclosure, the sensing signal receiver and the negotiation information receiver are the same device which is different from the sensing signal sender.

Further, in another embodiment of the present disclosure, the above apparatus is further configured for:
determining sensing signal configuration information based on the negotiation information; and
sending the sensing signal configuration information to the sensing signal sender.

Further, in another embodiment of the present disclosure, the above apparatus is further configured for:
sending indication information to the negotiation information sender, where the indication information is configured for indicating whether the negotiation information sender is allowed to send the negotiation information to the negotiation information receiver.

Further, in another embodiment of the present disclosure, the sensing signal sender and the sensing signal sender are the same device.

Further, in another embodiment of the present disclosure, the sensing signal sender and the sensing signal sender are different devices.

FIG. 9 is a schematic structural diagram of an apparatus for negotiation of sensing signals provided by another embodiment of the present disclosure. As shown in FIG. 9, the apparatus 900 may include:
a sending module 901, configured for sending negotiation information to the negotiation information receiver; the negotiation information include at least one of: a sensing request message, a sensing method supported by a sensing signal receiver, a transceiving mode of the sensing signal between a sensing signal sender and a sensing signal receiver, information of the sensing signal sender, information of the sensing signal receiver, type information of the sensing signal, resource configuration information of the sensing signal, and service information corresponding to the sensing signal.

In summary, in the apparatuses for negotiation of sensing signals provided by the embodiment of the present disclosure, the negotiation information sender can send negotiation information to the negotiation information receiver. Therefore, in the embodiment of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

In one embodiment of the present disclosure, the negotiation information receiver may include any one of:
a base station; or
a wireless access point.

Further, in another embodiment of the present disclosure, the negotiation information sender may include any one of:
a base station; or
a wireless access point;
a user equipment (UE); or
a core network entity.

Further, in another embodiment of the present disclosure, the core network entity may include any one of:
an AMF;
a UPF;
an MME; or
a service gateway.

Further, in another embodiment of the present disclosure, the sensing method may include at least one of:
a TOF sensing method; or
a PAC sensing method.

Further, in another embodiment of the present disclosure, the transceiving mode of the sensing signal may include at least one of:
the sensing signal sender being a base station, the sensing signal receiver being a base station, and the sensing signal sender and the sensing signal receiver being different base stations;
the sensing signal sender being a base station, the sensing signal receiver being a base station, and the sensing signal sender and the sensing signal receiver being the same base station;
the sensing signal sender being a wireless access point, the sensing signal receiver being a wireless access point, and the sensing signal sender and the sensing signal receiver being different wireless access points;
the sensing signal sender being a wireless access point, the sensing signal receiver being a wireless access point, and the sensing signal sender and the sensing signal receiver being the same wireless access point;
the sensing signal sender being a UE, the sensing signal receiver being a UE, and the sensing signal sender and the sensing signal receiver being different UEs;
the sensing signal sender being a UE, the sensing signal receiver being a UE, and the sensing signal sender and the sensing signal receiver being the same UE;
the sensing signal sender being a base station, and the sensing signal receiver being a UE;
the sensing signal sender being a UE, and the sensing signal receiver being a base station;
the sensing signal sender being a wireless access point, and the sensing signal receiver being a UE; or
the sensing signal sender being a UE, and the sensing signal receiver being a wireless access point.

Further, in another embodiment of the present disclosure, the information of the sensing signal sender may include at least one of:
a type of the sensing signal sender; or
an identity of the sensing signal sender.

Further, in another embodiment of the present disclosure, the type of the sensing signal sender may include any one of:
a base station;
a wireless access point; or
a UE.

Further, in another embodiment of the present disclosure, the identity of the sensing signal sender may include at least one of:
in response to the type of the sensing signal sender being a base station, an identity of the base station;
in response to the type of the sensing signal sender being a wireless access point, an identity of the wireless access point;
in response to the type of the sensing signal sender being a UE, an identity of the UE; or
a cell identity corresponding to the sensing signal sender.

Further, in another embodiment of the present disclosure, the cell identity corresponding to the sensing signal sender may include at least one of:
a frequency identity corresponding to the sensing signal sender;
a physical cell identity corresponding to the sensing signal sender; or
a global cell identity corresponding to the sensing signal sender.

Further, in another embodiment of the present disclosure, the information of the sensing signal receiver may include at least one of:
a type of the sensing signal receiver; or
an identity of the sensing signal receiver.

Further, in another embodiment of the present disclosure, the type of the sensing signal receiver may include any one of:
a base station;
a wireless access point; or
a UE.

Further, in another embodiment of the present disclosure, the identity of the sensing signal receiver may include at least one of:
in response to the sensing signal receiver being a base station, an identity of the base station;
in response to the sensing signal receiver being a wireless access point, an identity of the wireless access point;
in response to the sensing signal receiver being a UE, an identity of the UE; or
a cell identity corresponding to the sensing signal receiver.

Further, in another embodiment of the present disclosure, the cell identity corresponding to the sensing signal receiver may include at least one of:
a frequency identity corresponding to the sensing signal receiver;
a physical cell identity corresponding to the sensing signal receiver; or
a global cell identity corresponding to the sensing signal receiver.

Further, in another embodiment of the present disclosure, the type information of the sensing signal may include at least one of:
a waveform of the sensing signal; or
a signal type of the sensing signal.

Further, in another embodiment of the present disclosure, the waveform of the sensing signal may include at least one of:
an OFDM symbol waveform;
a pulse waveform; or
an FMCW.

Further, in another embodiment of the present disclosure, the signal type of the sensing signal may include at least one of:
an SSB;
a CSI-RS;
an SRS; or
a PRACH.

Further, in another embodiment of the present disclosure, the resource configuration information of the sensing signal may include at least one of:
time-domain resource configuration corresponding to the sensing signal;
frequency-domain resource configuration corresponding to the sensing signal;
coding resource configuration corresponding to the sensing signal; or
space resource configuration corresponding to the sensing signal.

Further, in another embodiment of the present disclosure, the time-domain resource configuration corresponding to the sensing signal may include at least one of:
a starting resource position of a time-domain resource configuration corresponding to the sensing signal;
a resource allocation period of the time-domain resource configuration corresponding to the sensing signal; or
an available resource position in each resource allocation period of the time-domain resource configuration corresponding to the sensing signal.

Further, in another embodiment of the present disclosure, the frequency-domain resource configuration corresponding to the sensing signal may include at least one of:
frequency point information corresponding to the sensing signal;
BWP information corresponding to the sensing signal;
PRB information corresponding to the sensing signal; or
bandwidth information corresponding to the sensing signal;

Further, in another embodiment of the present disclosure, the PRB information corresponding to the sensing signal may include at least one of:
a starting PRB identity corresponding to the sensing signal;
an ending PRB identity corresponding to the sensing signal; or
a number of PRBs corresponding to the sensing signal.

Further, in one embodiment of the present disclosure, the space resource configuration corresponding to the sensing signal may include at least one of:
a space resource identity corresponding to the sensing signal; or
a corresponding relationship between the space resource identity and a signal type of the sensing signal.

Further, in one embodiment of the present disclosure, the space resource identity corresponding to the sensing signal may include at least one of:
a transmission configuration indicator (TCI) identity corresponding to the sensing signal;
an SSB identity corresponding to the sensing signal;
a CSI-RS identity corresponding to the sensing signal; or
an SRS identity corresponding to the sensing signal.

Further, in another embodiment of the present disclosure, the service information corresponding to the sensing signal may include at least one of:
information of a sensed target;
service identity information of a service corresponding to the sensing signal;
bearer information corresponding to the sensing signal, the bearer information being bearer information corresponding to a service corresponding to the sensing signal;
service type information of a service corresponding to the sensing signal; or
a sensing requirement of a service corresponding to the sensing signal.

Further, in another embodiment of the present disclosure, the information of the sensed target may include at least one of:
an area position of the sensed target;
type of the sensed target; or
an identity of the sensed target.

Further, in another embodiment of the present disclosure, the bearer information corresponding to the sensing signal may include at least one of:
a session identity corresponding to the sensing signal;
a service flow identity corresponding to the sensing signal;
a radio bearer identity corresponding to the sensing signal; or
a logical channel identity corresponding to the sensing signal.

Further, in another embodiment of the present disclosure, the service type information of a service corresponding to the sensing signal may include at least one of:
weather forecast sensing;
traffic congestion sensing;
pulse sensing;
3 Dimensions (3D) imaging sensing; or
augmented reality (AR) game sensing.

Further, in another embodiment of the present disclosure, the sensing requirement of the service corresponding to the sensing signal may include at least one of:
sensing a distance between the sensing signal receiver and the sensed target;
sensing accuracy of the distance;
sensing a range of an angle between the sensing signal receiver and the sensed target;
sensing accuracy of the angle;
sensing a maximum speed of the sensed target; or
sensing accuracy of the speed.

Further, in another embodiment of the present disclosure, the sensing signal sender, the sensing signal receiver and the negotiation information receiver can be the different devices respectively.

Further, in another embodiment of the present disclosure, the sensing signal sender and the negotiation information receiver are the same device which is different from the sensing signal receiver.

Further, in another embodiment of the present disclosure, the sensing signal receiver and the negotiation information sender are the same device which is different from the sensing signal sender.

Further, in another embodiment of the present disclosure, the negotiation information sender is a device providing services for the sensing signal sender and/or the sensing signal receiver.

Further, in another embodiment of the present disclosure, the sensing signal sender and the sensing signal sender are the same device.

Further, in another embodiment of the present disclosure, the sensing signal sender and the sensing signal sender are different devices.

Further, in another embodiment of the present disclosure, the above apparatus is further configured for:
receiving the indication information sent by the negotiation information receiver, where the indication information is configured for indicating whether the negotiation information sender is allowed to send the negotiation information to the negotiation information receiver;
in response to that the indication information indicates that the negotiation information sender is allowed to send the negotiation information to the negotiation information receiver, sending the negotiation information to the negotiation information receiver.

FIG. 10 is a schematic structural diagram of an apparatus for negotiation of sensing signals provided by an embodiment of the present disclosure. As shown in FIG. 10, the apparatus 1000 may include:
a receiving module 1001, configured for receiving sensing signal configuration information sent by the negotiation information receiver;
a sending module 1002, further configured for sending the sensing signal to the sensing signal receiver based on the sensing signal configuration information.

In summary, in the apparatuses for negotiation of sensing signals provided by the embodiment of the present disclosure, the sensing signal sender can receive the sensing signal configuration information sent by the negotiation information receiver, and send the sensing signal to the sensing signal receiver based on the sensing signal configuration information. Therefore, in the embodiment of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

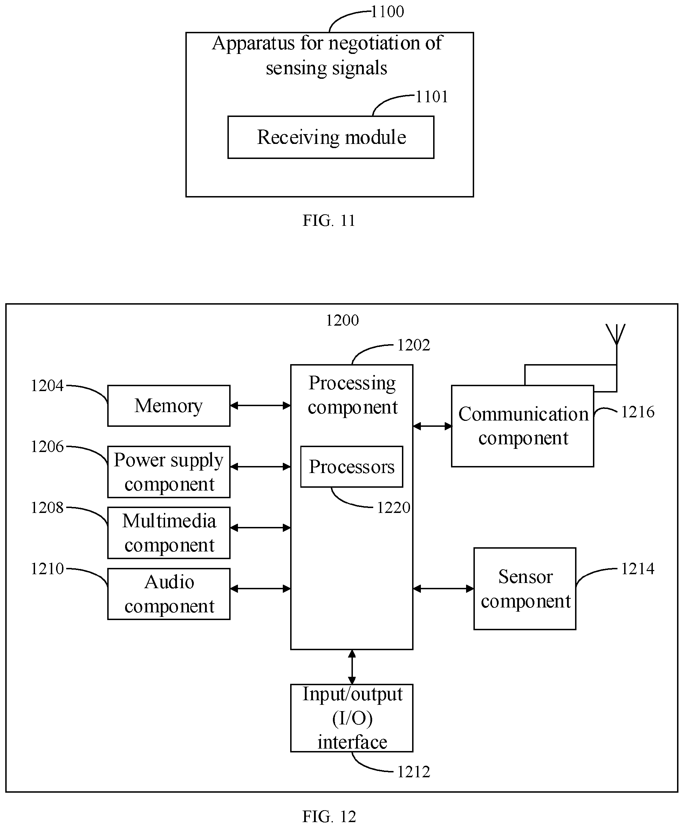

FIG. 11 is a schematic structural diagram of an apparatus for negotiation of sensing signals provided by an embodiment of the present disclosure. As shown in FIG. 11, an apparatus 1100 may include:
a receiving module 1101, configured for receiving sensing signal configuration information sent by the negotiation information receiver;
wherein the receiving module 1101 is further configured for receiving the sensing signal sent by the sensing signal sender based on the sensing signal configuration information.

In summary, in the apparatuses for negotiation of sensing signals provided by the embodiment of the present disclosure, the sensing signal receiver can receive the sensing signal configuration information sent by the negotiation information receiver, and receive the sensing signal sent by the sensing signal receiver based on the sensing signal configuration information. Therefore, in the embodiment of the present disclosure, before configuring the sensing signal, negotiation information is first determined based on the sensing signal sender and/or the sensing signal receiver, and then the sensing signal configuration information is determined based on the negotiation information. This ensures that the determined sensing signal configuration information can adapt to the requirements of the sensing signal sender and the sensing signal receiver for the sensing signal and the application scene of the sensing signal, thus ensuring the subsequent sensing effect.

In another embodiment of the present disclosure, the above apparatus is further configured for:
sensing based on the sensing signals.

The computer storage medium provided by the embodiment of the present disclosure stores an executable program. After the executable program is executed by the processor, the method as shown in any one of Figs. 1 to 3 or Figs. 4 to 5 or Fig. 6 or Fig. 7 can be realized.

In order to implement the above embodiments, the present disclosure also proposes a computer program product including a computer program that, when executed by a processor, implements the method as shown in any of Figs. 1 to 3 or Figs. 4 to 5 or Figs. 6 to 7.

In addition, in order to implement the above embodiments, the present disclosure also provides a computer program that, when executed by a processor, implements the method as shown in any of Figs. 1 to 3 or Figs. 4 to 5 or Fig. 6 or Fig. 7.

In order to realize the above embodiment, the present disclosure also provides a core network entity, including: a transceiver; a memory; a processor connected to the transceiver and the memory respectively, configured for controlling the wireless signal transceiving of the transceiver by executing computer-executable instructions on the memory, and implementing the method as described in any one of Figs. 1 to 3 or Figs. 4 to 5 or Fig. 6 or Fig. 7.

FIG. 12 is a block diagram of a user equipment (UE) 1200 provided by an embodiment of the present disclosure. For example, the UE 1200 may be a mobile phone, a computer, a digital broadcast terminal, a message transceiving device, a game console, a tablet device, a medical device, a fitness device and a personal digital assistant and so on.

As shown in FIG. 12, the UE 1200 may include one or more of the following components: a processing component 1202, a memory 1204, a power supply component 1206, a multimedia component 1208, an audio component 1210, an input/output (I/O) interface 1212, a sensor component 1213, and a communication component 1216.

The processing component 1202 generally controls the overall operations of the UE 1200, such as operations associated with display, calling, data communication, camera operation and recording operation. The processing component 1202 may include one or more processors 1220 to execute instructions to complete all or a part of the blocks of the above methods. Further, the processing component 1202 may include one or more modules to facilitate interaction between the processing component 1202 and another component. For example, the processing component 1202 may include a multimedia module to facilitate the interaction between the multimedia component 1208 and the processing component 1202.

The memory 1204 is configured to store different types of data to support the operations of the UE 1200. Examples of such data include instructions, contact data, phonebook data, messages, pictures, videos, and so on for any application or method that operates on the UE 1200. The memory 1204 may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only Memory (ROM), a magnetic memory, a flash memory, a disk or a CD.

The power supply component 1206 provides power for different components of the UE 1200. The power supply component 1206 may include a power management system, one or more power sources, and other components associated with generating, managing and distributing power for the UE 1200.

The multimedia component 1208 may include a screen for providing an output interface between the UE 1200 and a user. In some examples, the screen may include a liquid crystal display (LCD) and a touch panel (TP). If the screen includes a touch panel, the screen may be implemented as a touch screen for receiving an input signal from a user. The touch panel may include one or more touch sensors for sensing a touch, a slide and a gesture on the touch panel. The touch sensor may not only sense a boundary of a touching or sliding movement, but also detect wake-up duration and pressure related to the touching or sliding operation. In some examples, the multimedia component 1208 may include a front camera and/or a rear camera. When the UE 1200 is in an operation mode, such as a shooting mode or a video mode, the front camera and/or the rear camera may receive external multimedia data. Each of the front camera and the rear camera may be a fixed optical lens system or be of a focal length and a capability of an optical zoom.

The audio component 1210 is configured to output and/or input an audio signal. For example, the audio component 1210 may include a microphone (MIC). When the UE 1200 is in an operating mode, such as a call mode, a recording mode and a speech recognition mode, the microphone is configured to receive an external audio signal. The received audio signal may be further stored in the memory 1204 or sent via the communication component 1216. In some examples, the audio component 1210 also includes a speaker for outputting an audio signal.

The I/O interface 1212 may provide an interface between the processing component 1202 and peripheral interface modules. The above peripheral interface modules may include a keyboard, a click wheel, buttons and so on. These buttons may include but not limited to, a home button, a volume button, a start button and a lock button.

The sensor component 1213 includes one or more sensors for providing state assessments in different aspects for the UE 1200. For example, the sensor component 1213 may detect the on/off status of the UE 1200, and relative positioning of component, for example, the component is a display and a keypad of the UE 1200. The sensor component 1213 may also detect a change in position of the UE 1200 or a component of the UE 1200, a presence or absence of the contact between a user and the UE 1200, an orientation or an acceleration/deceleration of the UE 1200, and a change in temperature of the UE 1200. The sensor component 1213 may include a proximity sensor for detecting the existence of a nearby object without any physical touch. The sensor component 1213 may also include an optical sensor, such as a CMOS or CCD image sensor used in an imaging application. In some examples, the sensor component 1213 may also include an acceleration sensor, a gyro sensor, a magnetic sensor, a pressure sensor, or a temperature sensor.

The communication component 1216 is configured to facilitate wired or wireless communication between the UE 1200 and other devices. The UE 1200 may access a wireless network based on a communication standard, such as WiFi, 2G or 3G, or a combination thereof. In some embodiments, the communication component 1216 may receive a broadcast signal or broadcast-related information from an external broadcast management system via a broadcast channel. In an example, the communication component 1216 may also include a near field communication (NFC) module to facilitate short-range communications. For example, the NFC module may be implemented based on radio frequency identity (RFID) technology, infrared data association (IrDA) technology, ultra-wideband (UWB) technology, bluetooth (BT) technology and other technologies.

In an example, the UE 1200 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic elements, for executing the method in any one of the above examples.

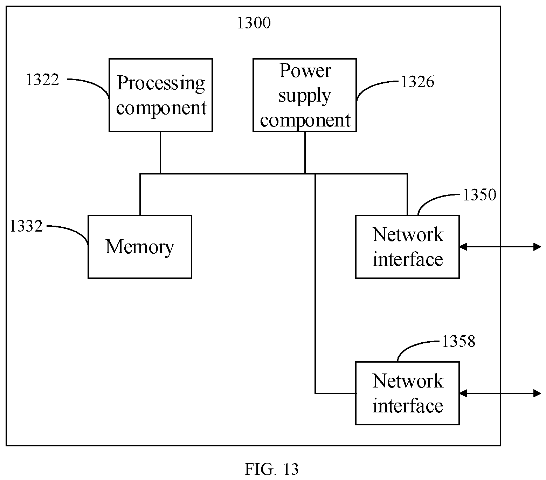

FIG. 13 is a block diagram of a base station 1300 provided by an embodiment of the present disclosure. For example, the base station 1300 may be provided as a base station. Referring to FIG. 13, the base station 1300 includes a processing component 1311, which further includes at least one processor, and a memory resource represented by a memory 1332 for storing instructions, such as applications, executable by a processing component 1322. The application stored in the memory 1332 may include one or more modules, and each module corresponds to a set of instructions respectively. In addition, the processing component 1315 is configured to execute instructions to execute any of the methods described above applied to the base station, for example, the method as shown in Fig. 1.

The base station 1300 may also include a power supply component 1326 configured to perform power management of the base station 1300, a wired/wireless network interface 1350 configured to connect the base station 1300 to a network and an input/output (I/O) interface 1358. The base station 1300 may operate based on an operating system, such as Windows ServerTM, Mac OS XTM, UnixTM, LinuxTM, FreeBSDTM or the like, stored in the memory 1332.

Other implementations of the present disclosure will be apparent to those skilled in the art from consideration of the specification and practice of the present disclosure herein. The present disclosure is intended to cover any variations, uses, modification or adaptations of the present disclosure that follow the general principles thereof and include common knowledge or conventional technical means in the art that are not disclosed in the present disclosure. The specification and examples herein are intended to be illustrative only and the real scope and spirit of the present disclosure are indicated by the following claims of the present disclosure.

It is to be understood that the present disclosure is not limited to the precise structures described above and shown in the accompanying drawings and may be modified or changed without departing from the scope of the present disclosure. The scope of protection of the present disclosure is limited only by the appended claims.

## Claims

1. A method for negotiation of sensing signals, applied to a negotiation information receiver, comprising:
obtaining negotiation information sent by a negotiation information sender,
wherein the negotiation information comprises at least one of: a sensing request message, a sensing method supported by a sensing signal receiver, a transceiving mode of the sensing signal between a sensing signal sender and the sensing signal receiver, information of the sensing signal sender, information of the sensing signal receiver, type information of the sensing signal, resource configuration information of the sensing signal, and service information corresponding to the sensing signal.

2. The method of claim 1, wherein the negotiation information receiver comprises any one of:
a base station; or
a wireless access point.

3. The method of claim 1, wherein the negotiation information sender comprises any one of:
a base station;
a wireless access point;
a user equipment, UE; or
a core network entity.

4. The method of claim 3, wherein the core network entity comprises any one of:
an access and mobility management function, AMF;
a user plane function, UPF;
a mobility management entity, MME; or
a service gateway.

5. The method of claim 1, wherein the sensing method comprises at least one of:
a time of flight, TOF sensing method; or
a phase and amplitude change, PAC sensing method.

6. The method of claim 1, wherein the transceiving mode of the sensing signal comprises at least one of:
the sensing signal sender being a base station, the sensing signal receiver being a base station, and the sensing signal sender and the sensing signal receiver being different base stations;
the sensing signal sender being a base station, the sensing signal receiver being a base station, and the sensing signal sender and the sensing signal receiver being the same base station;
the sensing signal sender being a wireless access point, the sensing signal receiver being a wireless access point, and the sensing signal sender and the sensing signal receiver being different wireless access points;
the sensing signal sender being a wireless access point, the sensing signal receiver being a wireless access point, and the sensing signal sender and the sensing signal receiver being the same wireless access point;
the sensing signal sender being a UE, the sensing signal receiver being a UE, and the sensing signal sender and the sensing signal receiver being different UEs;
the sensing signal sender being a UE, the sensing signal receiver being a UE, and the sensing signal sender and the sensing signal receiver being the same UE;
the sensing signal sender being a base station, and the sensing signal receiver being a UE;
the sensing signal sender being a UE, and the sensing signal receiver being a base station;
the sensing signal sender being a wireless access point, and the sensing signal receiver being a UE; or
the sensing signal sender being a UE, and the sensing signal receiver being a wireless access point.

7. The method of claim 1, wherein the information of the sensing signal sender comprises at least one of:
a type of the sensing signal sender; or
an identity of the sensing signal sender.

8. The method of claim 7, wherein the type of the sensing signal sender comprises at least one of:
a base station;
a wireless access point; or
a UE.

9. The method of claim 8, wherein the identity of the sensing signal sender comprises at least one of:
in response to the type of the sensing signal sender being a base station, an identity of the base station;
in response to the type of the sensing signal sender being a wireless access point, an identity of the wireless access point;
in response to the type of the sensing signal sender being a UE, an identity of the UE; or
a cell identity corresponding to the sensing signal sender.

10. The method of claim 9, wherein the cell identity corresponding to the sensing signal sender comprises at least one of:
a frequency identity corresponding to the sensing signal sender;
a physical cell identity corresponding to the sensing signal sender; or
a global cell identity corresponding to the sensing signal sender.

11. The method of claim 1, wherein the information of the sensing signal receiver comprises at least one of:
a type of the sensing signal receiver; or
an identity of the sensing signal receiver.

12. The method of claim 11, wherein the type of the sensing signal receiver comprises at least one of:
a base station;
a wireless access point; or
a UE.

13. The method of claim 12, wherein the identity of the sensing signal receiver comprises at least one of:
in response to the type of the sensing signal receiver being a base station, an identity of the base station;
in response to the type of the sensing signal receiver being a wireless access point, an identity of the wireless access point;
in response to the type of the sensing signal receiver being a UE, an identity of the UE; or
a cell identity corresponding to the sensing signal receiver.

14. The method of claim 13, wherein the cell identity corresponding to the sensing signal receiver comprises at least one of:
a frequency identity corresponding to the sensing signal receiver;
a physical cell identity corresponding to the sensing signal receiver; or
a global cell identity corresponding to the sensing signal receiver.

15. The method of claim 1, wherein the type information of the sensing signal comprises at least one of:
a waveform of the sensing signal; or
a signal type of the sensing signal.

16. The method of claim 15, wherein the waveform of the sensing signal comprises at least one of:
an orthogonal frequency division multiplexing, OFDM symbol waveform;
a pulse waveform; or
a frequency modulated continuous wave, FMCW.

17. The method of claim 15, wherein the signal type of the sensing signal comprises at least one of:
a synchronization signal block, SSB;
a channel state information-reference signal, CSI-RS;
a sounding reference signal, SRS; or
a physical random access channel, PRACH.

18. The method of claim 1, wherein the resource configuration information of the sensing signal comprises at least one of:
time-domain resource configuration corresponding to the sensing signal;
frequency-domain resource configuration corresponding to the sensing signal;
coding resource configuration corresponding to the sensing signal; or
space resource configuration corresponding to the sensing signal.

19. The method of claim 18, wherein the time-domain resource configuration corresponding to the sensing signal comprises at least one of:
a starting resource position of a time-domain resource corresponding to the sensing signal;
a resource allocation period of the time-domain resource corresponding to the sensing signal; or
an available resource position in each resource allocation period of the time-domain resource corresponding to the sensing signal.

20. The method of claim 18, wherein the frequency-domain resource configuration corresponding to the sensing signal comprises at least one of:
frequency point information corresponding to the sensing signal;
bandwidth part, BWP information corresponding to the sensing signal;
physical resource block, PRB information corresponding to the sensing signal; or
bandwidth information corresponding to the sensing signal;

21. The method of claim 20, wherein the PRB information corresponding to the sensing signal comprises at least one of:
a starting PRB identity corresponding to the sensing signal;
an ending PRB identity corresponding to the sensing signal; or
a number of PRBs corresponding to the sensing signal.

22. The method of claim 18, wherein the space resource configuration corresponding to the sensing signal comprises at least one of:
a space resource identity corresponding to the sensing signal; or
a corresponding relationship between the space resource identity and a signal type of the sensing signal.

23. The method of claim 22, wherein the space resource identity corresponding to the sensing signal comprises at least one of:
a transmission configuration indicator, TCI identity corresponding to the sensing signal;
an SSB identity corresponding to the sensing signal;
a CSI-RS identity corresponding to the sensing signal; or
an SRS identity corresponding to the sensing signal.

24. The method of claim 1, wherein the service information corresponding to the sensing signal comprises at least one of:
information of a sensed target;
service identity information of a service corresponding to the sensing signal;
bearer information corresponding to the sensing signal, the bearer information being bearer information corresponding to a service corresponding to the sensing signal;
service type information of a service corresponding to the sensing signal; or
a sensing requirement of a service corresponding to the sensing signal.

25. The method of claim 24, wherein the information of the sensed target comprises at least one of:
an area position of the sensed target;
a type of the sensed target; or
an identity of the sensed target.

26. The method of claim 24, wherein the bearer information corresponding to the sensing signal comprises at least one of:
a session identity corresponding to the sensing signal;
a service flow identity corresponding to the sensing signal;
a radio bearer identity corresponding to the sensing signal; or
a logical channel identity corresponding to the sensing signal.

27. The method of claim 24, wherein the service type information of the service corresponding to the sensing signal comprises at least one of:
weather forecast sensing;
traffic congestion sensing;
pulse sensing;
3 Dimensions, 3D imaging sensing; or
augmented reality, AR game sensing.

28. The method of claim 24, wherein the sensing requirement of the service corresponding to the sensing signal comprises at least one of:
sensing a distance between the sensing signal receiver and the sensed target;
sensing accuracy of the distance;
sensing a range of an angle between the sensing signal receiver and the sensed target;
sensing accuracy of the angle;
sensing a maximum speed of the sensed target; or
sensing accuracy of the speed.

29. The method of claim 1, wherein the sensing signal sender, the sensing signal receiver and the negotiation information receiver are different devices, respectively.

30. The method of claim 29, further comprising:
determining sensing signal configuration information based on the negotiation information; and
sending the sensing signal configuration information to the sensing signal sender and the sensing signal receiver, respectively.

31. The method of claim 1, wherein the sensing signal sender and the negotiation information receiver are the same device which is different from the sensing signal receiver.

32. The method of claim 31, further comprising:
determining sensing signal configuration information based on the negotiation information; and
sending the sensing signal configuration information to the sensing signal receiver.

33. The method of claim 1, wherein the sensing signal receiver and the negotiation information receiver are the same device which is different from the sensing signal sender.

34. The method of claim 33, further comprising:
determining sensing signal configuration information based on the negotiation information; and
sending the sensing signal configuration information to the sensing signal sender.

35. The method of claim 1, further comprising:
sending indication information to the negotiation information sender, wherein the indication information is configured for indicating whether the negotiation information sender is allowed to send the negotiation information to the negotiation information receiver.

36. The method of any one of claims 1-35, wherein the sensing signal sender and the sensing signal sender are the same device.

37. The method of any one of claims 1-35, wherein the sensing signal sender and the sensing signal sender are different devices.

38. A method for negotiation of sensing signals, applied to a negotiation information sender, comprising:
sending negotiation information to a negotiation information receiver, wherein the negotiation information comprises at least one of: a sensing request message, a sensing method supported by a sensing signal receiver, a transceiving mode of the sensing signal between a sensing signal sender and the sensing signal receiver, information of the sensing signal sender, information of the sensing signal receiver, type information of the sensing signal, resource configuration information of the sensing signal, and service information corresponding to the sensing signal.

39. The method of claim 38, wherein the negotiation information receiver comprises any one of
a base station; or
a wireless access point.

40. The method of claim 38, wherein the negotiation information sender comprises any one of:
a base station;
a wireless access point;
a UE; or
a core network entity.

41. The method of claim 40, wherein the core network entity comprises any one of:
an AMF;
a UPF;
an MME; or
a service gateway.

42. The method of claim 38, wherein the sensing method comprises at least one of:
a TOF sensing method; or
a PAC sensing method.

43. The method of claim 38, wherein the transceiving mode of the sensing signal comprises at least one of:
the sensing signal sender being a base station, the sensing signal receiver being a base station, and the sensing signal sender and the sensing signal receiver being different base stations;
the sensing signal sender being a base station, the sensing signal receiver being a base station, and the sensing signal sender and the sensing signal receiver being the same base station;
the sensing signal sender being a wireless access point, the sensing signal receiver being a wireless access point, and the sensing signal sender and the sensing signal receiver being different wireless access points;
the sensing signal sender being a wireless access point, the sensing signal receiver being a wireless access point, and the sensing signal sender and the sensing signal receiver being the same wireless access point;
the sensing signal sender being a UE, the sensing signal receiver being a UE, and the sensing signal sender and the sensing signal receiver being different UEs;
the sensing signal sender being a UE, the sensing signal receiver being a UE, and the sensing signal sender and the sensing signal receiver being the same UE;
the sensing signal sender being a base station, and the sensing signal receiver being a UE;
the sensing signal sender being a UE, and the sensing signal receiver being a base station;
the sensing signal sender being a wireless access point, and the sensing signal receiver being a UE; or
the sensing signal sender being a UE, and the sensing signal receiver being a wireless access point.

44. The method of claim 38, wherein the information of the sensing signal sender comprises at least one of:
a type of the sensing signal sender; or
an identity of the sensing signal sender.

45. The method of claim 44, wherein the type of the sensing signal sender comprises at least one of:
a base station;
a wireless access point; or
a UE.

46. The method of claim 44, wherein the identity of the sensing signal sender comprises at least one of:
in response to the type of the sensing signal sender being a base station, an identity of the base station;
in response to the type of the sensing signal sender being a wireless access point, an identity of the wireless access point;
in response to the type of the sensing signal sender being a UE, an identity of the UE; or
a cell identity corresponding to the sensing signal sender.

47. The method of claim 46, wherein the cell identity corresponding to the sensing signal sender comprises at least one of:
a frequency identity corresponding to the sensing signal sender;
a physical cell identity corresponding to the sensing signal sender; or
a global cell identity corresponding to the sensing signal sender.

48. The method of claim 38, wherein the information of the sensing signal receiver comprises at least one of:
a type of the sensing signal receiver; or
an identity of the sensing signal receiver.

49. The method of claim 48, wherein the type of the sensing signal receiver comprises at least one of:
a base station;
a wireless access point; or
a UE.

50. The method of claim 48, wherein the identity of the sensing signal receiver comprises at least one of:
in response to the type of the sensing signal receiver being a base station, an identity of the base station;
in response to the type of the sensing signal receiver being a wireless access point, an identity of the wireless access point;
in response to the type of the sensing signal receiver being a UE, an identity of the UE; or
a cell identity corresponding to the sensing signal receiver.

51. The method of claim 50, wherein the cell identity corresponding to the sensing signal receiver comprises at least one of:
a frequency identity corresponding to the sensing signal receiver;
a physical cell identity corresponding to the sensing signal receiver; or
a global cell identity corresponding to the sensing signal receiver.

52. The method of claim 38, wherein the type information of the sensing signal comprises at least one of:
a waveform of the sensing signal; or
a signal type of the sensing signal.

53. The method of claim 52, wherein the waveform of the sensing signal comprises at least one of:
an OFDM symbol waveform;
a pulse waveform; or
an FMCW.

54. The method of claim 52, wherein the signal type of the sensing signal comprises at least one of:
an SSB;
a CSI-RS;
an SRS; or
a PRACH.

55. The method of claim 38, wherein the resource configuration information of the sensing signal comprises at least one of:
time-domain resource configuration corresponding to the sensing signal;
frequency-domain resource configuration corresponding to the sensing signal;
coding resource configuration corresponding to the sensing signal; or
space resource configuration corresponding to the sensing signal.

56. The method of claim 55, wherein the time-domain resource configuration corresponding to the sensing signal comprises at least one of:
a starting resource position of a time-domain resource corresponding to the sensing signal;
a resource allocation period of the time-domain resource corresponding to the sensing signal; or
an available resource position in each resource allocation period of the time-domain resource corresponding to the sensing signal.

57. The method of claim 55, wherein the frequency-domain resource configuration corresponding to the sensing signal comprises at least one of:
frequency point information corresponding to the sensing signal;
BWP information corresponding to the sensing signal;
PRB information corresponding to the sensing signal; or
bandwidth information corresponding to the sensing signal.

58. The method of claim 57, wherein the PRB information corresponding to the sensing signal comprises at least one of:
a starting PRB identity corresponding to the sensing signal;
an ending PRB identity corresponding to the sensing signal; or
a number of PRBs corresponding to the sensing signal.

59. The method of claim 55, wherein the space resource configuration corresponding to the sensing signal comprises at least one of:
a space resource identity corresponding to the sensing signal; or
a corresponding relationship between the space resource identity and a signal type of the sensing signal.

60. The method of claim 59, wherein the space resource identity corresponding to the sensing signal comprises at least one of:
a TCI identity corresponding to the sensing signal.
an SSB identity corresponding to the sensing signal;
a CSI-RS identity corresponding to the sensing signal; or
an SRS identity corresponding to the sensing signal.

61. The method of claim 38, wherein the service information corresponding to the sensing signal comprises at least one of:
information of a sensed target;
service identity information of a service corresponding to the sensing signal;
bearer information corresponding to the sensing signal, the bearer information being bearer information corresponding to a service corresponding to the sensing signal;
service type information of a service corresponding to the sensing signal; or
a sensing requirement of a service corresponding to the sensing signal.

62. The method of claim 61, wherein the information of the sensed target comprises at least one of:
an area position of the sensed target;
a type of the sensed target; or
an identity of the sensed target.

63. The method of claim 61, wherein the bearer information corresponding to the sensing signal comprises at least one of:
a session identity corresponding to the sensing signal;
a service flow identity corresponding to the sensing signal;
a radio bearer identity corresponding to the sensing signal; or
a logical channel identity corresponding to the sensing signal.

64. The method of claim 61, wherein the service type information of the service corresponding to the sensing signal comprises at least one of:
weather forecast sensing;
traffic congestion sensing;
pulse sensing;
3D imaging sensing; or
AR game sensing.

65. The method of claim 61, wherein the sensing requirement of the service corresponding to the sensing signal comprises at least one of:
sensing a distance between the sensing signal receiver and the sensed target;
sensing accuracy of the distance;
sensing a range of an angle between the sensing signal receiver and the sensed target;
sensing accuracy of the angle;
sensing a maximum speed of the sensed target; or
sensing accuracy of the speed.

66. The method of claim 38, wherein the sensing signal sender, the sensing signal receiver and the negotiation information sender are different devices respectively.

67. The method of claim 38, wherein the sensing signal sender and the negotiation information sender are the same device which is different from the sensing signal receiver.

68. The method of claim 38, wherein the sensing signal receiver and the negotiation information sender are the same device which is different from the sensing signal sender.

69. The method of claim 66, wherein the negotiation information sender is a device providing services for the sensing signal sender and/or the sensing signal receiver.

70. The method of any one of claims 38-69, wherein the sensing signal sender and the sensing signal sender are the same device.

71. The method of any one of claims 38-69, wherein the sensing signal sender and the sensing signal sender are different devices.

72. The method of claim 38, further comprising:
receiving indication information sent by the negotiation information receiver, wherein the indication information is configured for indicating whether the negotiation information sender is allowed to send the negotiation information to the negotiation information receiver;
in response to that the indication information indicates that the negotiation information sender is allowed to send the negotiation information to the negotiation information receiver, sending the negotiation information to the negotiation information receiver.

73. A method for negotiation of sensing signals, applied to a sensing signal sender, comprising:
receiving sensing signal configuration information sent by a negotiation information receiver; and
sending a sensing signal to a sensing signal receiver based on the sensing signal configuration information.

74. A method for negotiation of sensing signals, applied to a sensing signal receiver, comprising:
receiving sensing signal configuration information sent by a negotiation information receiver; and
receiving a sensing signal sent by a sensing signal sender based on the sensing signal configuration information.

75. The method of claim 74, further comprising:
sensing based on the sensing signal.

76. An apparatus for negotiation of sensing signals, comprising:
an obtaining module, configured for obtaining negotiation information sent by a negotiation information sender, wherein the negotiation information comprises at least one of: a sensing request message, a sensing method supported by a sensing signal receiver, a transceiving mode of the sensing signal between a sensing signal sender and a sensing signal receiver, information of the sensing signal sender, information of the sensing signal receiver, type information of the sensing signal, resource configuration information of the sensing signal, and service information corresponding to the sensing signal.

77. An apparatus for negotiation of sensing signals, comprising:
a sending module, configured for sending negotiation information to a negotiation information receiver, wherein the negotiation information comprises at least one of: a sensing request message, a sensing method supported by a sensing signal receiver, a transceiving mode of the sensing signal between a sensing signal sender and a sensing signal receiver, information of the sensing signal sender, information of the sensing signal receiver, type information of the sensing signal, resource configuration information of the sensing signal, and service information corresponding to the sensing signal.

78. An apparatus for negotiation of sensing signals, comprising:
a receiving module, configured for receiving sensing signal configuration information sent by a negotiation information receiver;
a sending module, further configured for sending a sensing signal to a sensing signal receiver based on the sensing signal configuration information.

79. An apparatus for negotiation of sensing signals, comprising:
a receiving module, configured for receiving sensing signal configuration information sent by a negotiation information receiver,
wherein the receiving module is further configured for receiving a sensing signal sent by a sensing signal sender based on the sensing signal configuration information.

80. A user equipment, comprising: a transceiver; a memory; a processor connected to the transceiver and the memory respectively, configured for controlling wireless signal transceiving of the transceiver by executing computer-executable instructions on the memory, and implementing the method of any one of claims 1 to 37 or claims 38 to 71 or claim 72 or claims 73 to 74.

81. A base station, comprising: a transceiver; a memory; a processor connected to the transceiver and the memory respectively, configured for controlling wireless signal transceiving of the transceiver by executing computer-executable instructions on the memory, and implementing the method of any one of claims 1 to 37 or claims 38 to 72 or claim 73 or claims 74 to 75.

82. A core network entity, comprising: a transceiver; a memory; a processor connected to the transceiver and the memory respectively, configured for controlling wireless signal transceiving of the transceiver by executing computer-executable instructions on the memory, and implementing the method of any one of claims 1 to 37 or claims 38 to 72 or claim 73 or claims 74 to 75.

83. A computer storage medium storing computer executable instructions, wherein the computer executable instructions are executed by a processor to implement the method of any one of claims 1 to 37 or claims 38 to 72 or claim 73 or claims 74 to 75.
